# EUROPEAN PATENT SPECIFICATION

(11) **EP 3 537 276 B1**
(45) Date of publication and mention of the grant of the patent: **31.03.2021**
(21) Application number: 19170623.3
(22) Date of filing: 21.08.2013
(51) Int. Cl.: G06F 3/0481, G01C 21/36, G06T 17/00, G06F 3/14, G06T 17/05, G06T 15/20, G06T 19/20

(54) **USER INTERFACE FOR ORIENTING A CAMERA VIEW TOWARD SURFACES IN A 3D MAP AND DEVICES INCORPORATING THE USER INTERFACE**
BENUTZERSCHNITTSTELLE ZUM AUSRICHTEN EINES KAMERABILDES AUF OBERFLÄCHEN IN EINER 3D-KARTE UND VORRICHTUNGEN MIT DER BENUTZERSCHNITTSTELLE
INTERFACE D'UTILISATEUR POUR ORIENTER UNE VUE DE CAMÉRA VERS DES SURFACES SUR UNE CARTE 3D, ET DISPOSITIFS INCORPORANT L'INTERFACE D'UTILISATEUR

(30) Priority: 04.09.2012 US 201213602642
(43) Date of publication of application: 11.09.2019
(62) Divisional of application: 13835152.3
(73) Proprietor: Google LLC, Mountain View, CA 94043 (US)
(72) Inventor: OFSTAD, Andrew, San Francisco, CA California 94114 (US); LEONG, Su, Chin, Soutn San Francisco, CA California 94080 (US)
(74) Representative: Smith, Jeremy Robert

(56) References cited:
- US-A1- 2010 325 589

## Description

### Field of the Disclosure

The present disclosure relates to user interfaces for orienting a camera view within a 3D map display. More specifically, the present disclosure relates to devices and methods that determine a zoom level for a 3D map display, that determine 3D geometry for a map feature within the 3D map and that orient a camera view toward a surface of the map feature based on the zoom level and the 3D geometry when a user selects a point within the 3D geometry.

### Background

Geographic mapping applications represent some of the most frequently used applications within computing environments. The content of the geographic maps often includes information related to various attributes of the geographic region being viewed. Information related to continents, countries, states, providences, counties, municipalities, neighborhoods, businesses, services and the like, is often provided along with a geographic map.

More recently, databases for related mapping applications store data representative of three dimensional views of various map features (e.g., buildings, physical facilities, natural formations, landmarks, etc.). The content of any given three dimensional image database may be developed and maintained by an entity associated with a corresponding geographic region. The data associated with the three dimensional map features is often provided along with geographic map data.

US 2010/0325589 A1 discloses various embodiments that provide techniques for geographic navigation via one or more block views.

### Summary

Aspects of the invention are set out in the independent claims.

A method according to the invention is defined in claim 1.

A computing device according to the invention is defined in claim 6.

A non transitory computer-readable medium according to the invention is defined in claim 10.

The dependent claims define further advantageous embodiments.

### Brief Description of the Drawings

Fig. 1A depicts an aerial 3D global view of a display of a 3D scene within a map viewport including a plurality of map features and a 3D cursor;
Fig. 1B depicts an aerial 3D global view of a display of the 3D scene of Fig. 1A within a map viewport including a plurality of map features and a 3D cursor oriented toward a surface of a map feature;
Fig. 1C depicts an aerial 3D global view of a display of the 3D scene of Fig. 1B within a map viewport with a camera view oriented toward a surface of a map feature identified by the 3D cursor of Fig. 1B;
Fig. 2A depicts a high-level system diagram representing an example computer network for providing a user of a computing device a display of a 3D scene with a camera view oriented toward a surface of a map feature;
Fig. 2B depicts a data structure for a 3D scene, a 3D cursor and map features;
Fig. 3 depicts an example computing device with various modules for use in providing a user a display of a 3D scene with a camera view oriented toward a surface of a map feature;
Fig. 4 depicts an example server with various modules for generating data for use in providing a user of a computing device a display of a 3D scene with a camera view oriented toward a surface of a map feature;
Fig. 5 depicts a flow diagram of a method for providing a user of a computing device a display of a 3D scene with a camera view oriented toward a surface of a map feature; and
Fig.6 depicts a 3D street view display of a 3D scene within a map viewport including a plurality of map features and a 3D cursor.

### Detail Description

Displaying a 3D scene to a user of a computing device is often times useful when the 3D scene includes a plurality of map features, such as 3D representations of buildings, physical facilities, natural formations, landmarks, etc. However, a user may have difficulty orienting the 3D scene when attempting to view a particular perspective of any given map feature within the 3D scene. 3D scene orientation is particularly difficult when transitioning between an aerial 3D global view and a 3D street level view within a 3D scene.

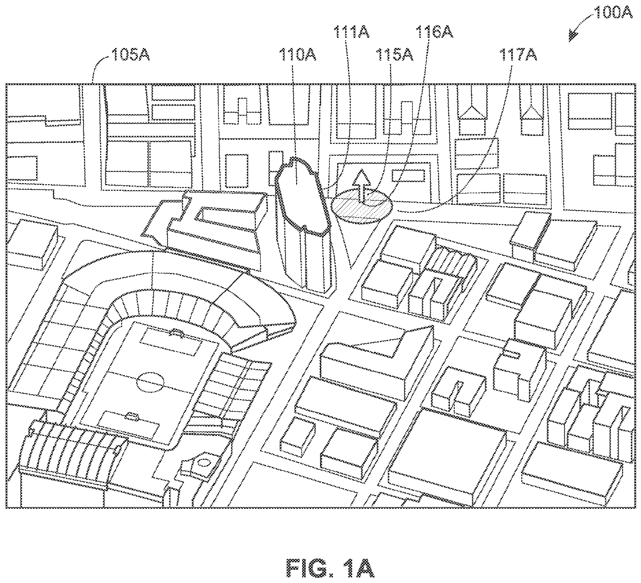

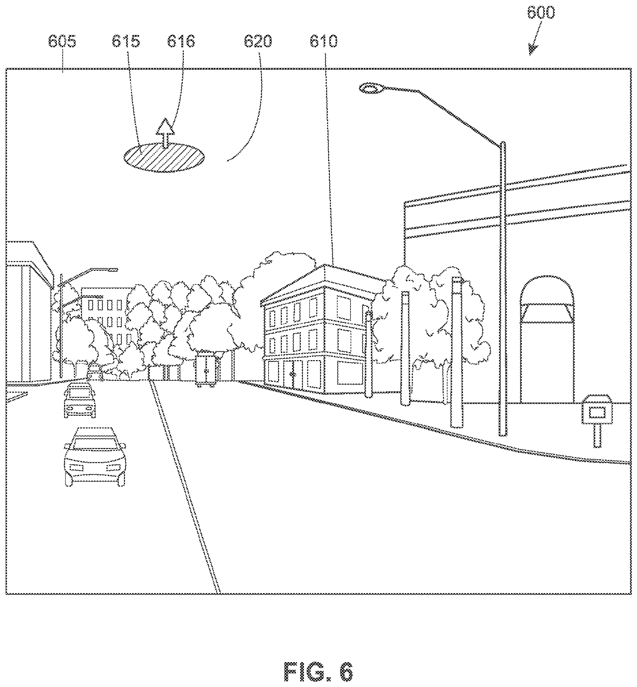

User interfaces may orient a view of a 3D scene within a map viewport displayed on a client computing device. The user interfaces of the present disclosure include a 3D cursor that automatically orients itself to a surface of a map feature over which the 3D cursor is currently positioned as the user moves the cursor around within the map viewport. In a "tilt," or "aerial 3D globe" view, selection of a map feature may orient a camera view by rotating the globe such that the surface of the map feature directly faces the camera. The orientation of the 3D cursor at any given position within the 3D scene may indicate to the user that a view corresponding to the 3D cursor orientation of a map feature will result if the user selects a corresponding cursor controller. In one example related to the invention, 2. when a user hovers the 3D cursor over a ground plane 117A within an aerial 3D global view display (e.g., the display of Fig. 1A), an arrow portion 116A of a 3D cursor may be oriented toward the North and actuating an associated cursor controller while the 3D cursor is oriented to the North may change the display to a 3D street view (e.g., the display of Fig. 6). Selecting a point in a sky area of the display while the current display depicts a 3D street view (e.g., the display of Fig. 6) may move the view to an aerial 3D globe view (e.g., the display of Fig. 1A).

The system may render 3D scene and 3D geometric shapes (i.e., a 3D cursor and 3D map features) within the 3D scene on a 2D display according to an isometric projection of the corresponding 3D geometry. In another implementation, however, the system may render a display to illustrate the 3D geometric shapes on a 2D display using a two-point perspective. More generally, the system may render a display to illustrate a 3D cursor and 3D map features for which 3D geometry data is available using any suitable 2D or 3D shapes rendered with any desired level of detail.

An associated method implemented on a client computing device may orient a view of a 3D scene within a map viewport depicted on a display of the client computing device. The method may include receiving data representative of a 3D scene via a computer network where the scene includes a zoom level and a plurality of map features. The method may identify a 3D geometry of a map feature within the 3D scene based on the received data and determine an orientation of a 3D cursor based on the zoom level and the 3D geometry of the map feature. The method may further receive a 3D cursor selection indicating a point within the 3D geometry of the map feature and orient the 3D scene view within a map viewport in response to receiving the 3D cursor selection. The method may also display the map feature based on the point within the 3D geometry of the map feature indicated by the 3D cursor selection.

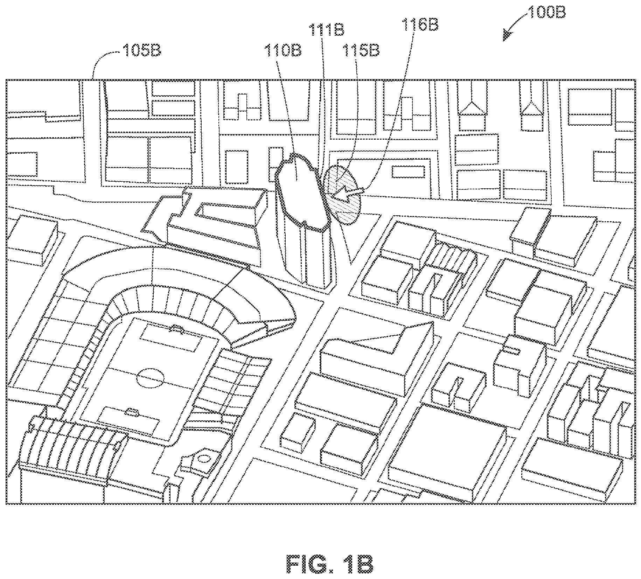

Figs. 1A and 1B depict a sequence of displays that reflect a 3D cursor 115A having an arrow portion 116A, 115B automatically orienting itself to a surface 111A, 111B of a map feature 110A, 110B as the 3D cursor 115A, 115B is moved by a user within the 3D scene 105A, 105B. In a tilt or globe view, selection orients a camera view by rotating the globe such that the surface of the map feature faces the camera.

As depicted in Fig. 1A, the 3D scene 105A is displayed within a map viewport 100A. The 3D cursor 115A is not positioned over the map feature 110A in Fig. 1A. As depicted in Fig. 1B, the 3D scene 105B is displayed within a map viewport 100B. The display within the map viewport 100B is similar to the display within the map viewport 100A aside from the 3D cursor 115B being positioned over, and the arrow portion 116B being oriented toward a surface 111B of the map feature 110B. As can be appreciated from viewing Fig. 1B, the cursor 115B orientation indicates that the 3D scene will be re-oriented such that the surface 111B of the map feature 110B will be visible if the user clicks on a corresponding cursor controller while the 3D cursor 115B is in the given position.

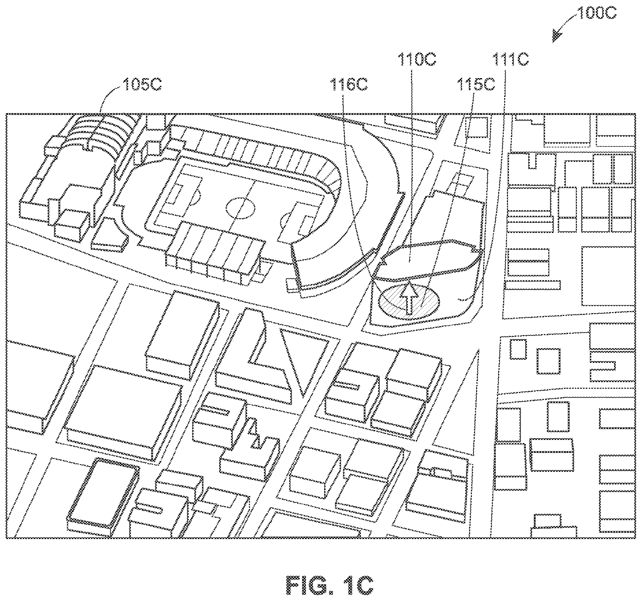

Fig. 1C depicts the 3D scene 105C within the map viewport 100C subsequent to the user clicking a corresponding cursor control device while the 3D cursor 115B arrow portion 116B is oriented as depicted in Fig. 1B. As can be seen from Fig. 1C, the surface 111C (which is shown as surface 111A in Fig. 1A and surface 111B in Fig. 1B) of the map feature 110C (which is shown as map feature 110A in Fig. 1A and map feature 110B in Fig. 1B) is visible. The 3D scene 105C may include a 3D cursor 115C having an arrow portion 116C oriented as depicted in Fig. 1C.

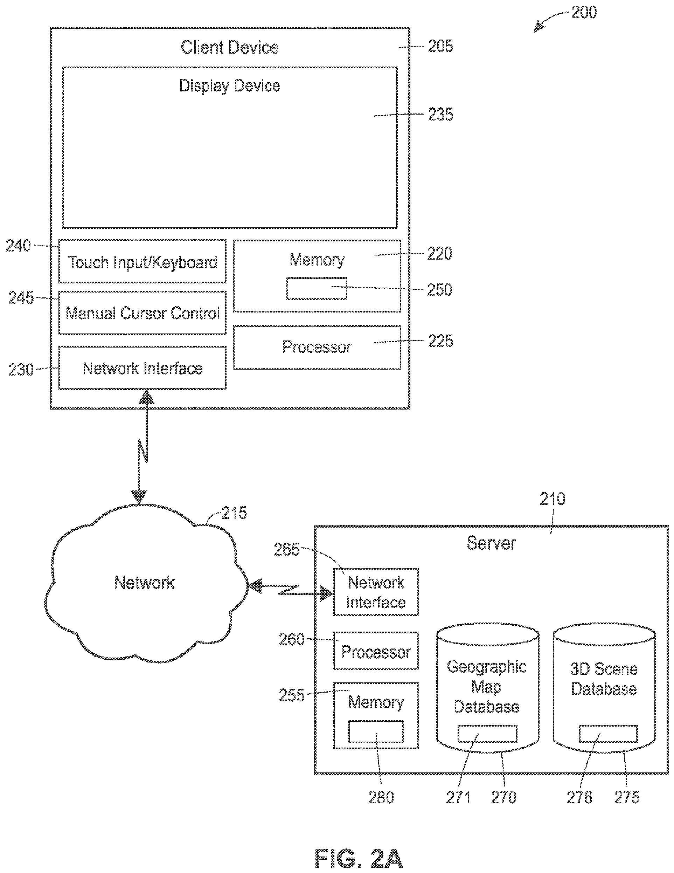

Turning to Fig. 2A, a high-level system diagram depicts an example computer network 200 for providing a user of a client device 205 a display of a desired orientation of a 3D scene. For clarity, only one client device 205 is depicted. It should be understood that any number of client devices may be supported and that any given client device may be an appropriate computing device, such as a desk-top computer, a mobile telephone, a personal data assistant, a lap-top computer, a vehicle-based computer system, etc. The client device 205 may include a memory 220 and a processor 225 for storing and executing, respectively, various modules 250 related to providing a view of a desired orientation of a 3D scene to a user. A display device 235 for any particular client device 205 may be any appropriate type of electronic display device such as a liquid crystal display (LCD), a light emitting diode (LED) display, a plasma display, a cathode ray tube (CRT) or any other type of known or suitable display. The client device 205 may include a cursor control 245, such as a 2D cursor controller (e.g., a mouse). It should be understood that the cursor control 245 may alternatively be a 3D cursor controller. The client device 205 may include a touch input/keyboard 240, such as a standard keyboard or a touch-screen input. It should be understood that a touch-screen input device may be incorporated within the display device 235, for example. The client device 205 is communicatively coupled to a remote server 210 via a wireless communications network 215. The client device 205 may also include a network interface 230 to facilitate communications between the client device 205 and the remote server 210 via any wireless communication network 215, including for example a wireless LAN, MAN or WAN, WiFi, the Internet, or any combination thereof. Moreover, the client device 205 may be communicatively connected to the server 205 via any suitable communication system, such as via any publicly available or privately owned communication network, including those that use wireless communication structures, such as wireless communication networks, including for example, satellite and cellular telephone communication systems, etc. A client device 3D scene display orientation module 250 may be stored on the memory 220 and include a plurality of instructions. The processor 225 may execute the instruction of the module 250 and retrieve data representative of a 3D scene having a zoom level and a plurality of map features, determine an orientation for a 3D cursor orientation based on the zoom level and a mesh geometry of a map feature and orient a view of the 3D scene within a map viewport when a user clicks on a corresponding cursor controller, for example. It should be understood that at least a portion of the functions described as being performed by execution of the client device 3D scene display orientation module 250 may be performed by execution of a server 3D scene display orientation module 280. For example, a zoom level and mesh geometry may be determined by execution of the server 3D scene display orientation module 280 and communicated to the client device 205.

The remote server 210 may include a memory 255 and a processor 260 for storing and executing, respectively, instructions of various modules (e.g., the 3D scene display orientation module 280) that facilitate communications between the remote server 210 and the client device 205 via a network interface 265 and the network 215. The remote server 210 may also include a geographic map database 270 for storing information related to geographic maps and a 3D map feature database 275 for storing data and information representative of mesh geometry associated with a plurality of map features. A server 3D scene display orientation module 280 may be stored on the memory 255 and include instructions that, when executed by the processor 260, may retrieve map feature data and determine mesh geometry associated with a map feature, for example. Alternatively, execution of the server 3D scene display orientation module 280 may provide geographic map data and map feature data to the client device 205. The geographic map database 270 and/or the 3D map feature database 275 may be stored on a memory remote from the server 210, as well as being remote from the client device 205. At least portions of the geographic map database 270 and/or the 3D map feature database 275 may be stored on a memory 220 within a client device 205.

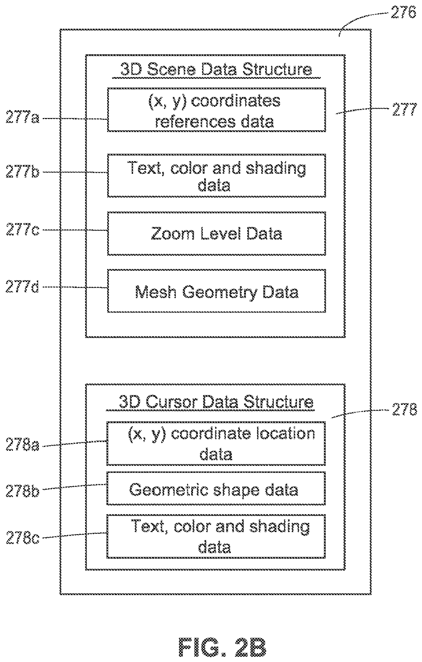

With reference to Fig. 2B, a data structure 276 may include a 3D scene data structure 277, a 3D cursor data structure 278 and a map feature data structure 278. The data structure 276 may be similar to the data structure 276 of Fig. 2A and stored in a 3D scene database similar to 3D scene database 275 of Fig. 2A. The 3D scene data structure 277 may include data that defines a (x, y) coordinate reference for a map view 277a, such as map viewport 100A of Fig. 1A, for example. The (x, y) coordinate reference 277a may be used to determine the location of map features within the map viewport and to determine a corresponding 3D cursor location. The 3D scene data structure 277 may further include data that defines colors and shading 277b within the 3D scene. The 3D scene data structure 277 may also include zoom level data 277c. The 3D scene data structure 277 may yet further include mesh geometry data 277d. The 3D scene data structure 277 may include (x, y, z) coordinate data that defines at least a portion of a 3D scene in addition to, or in lieu of (x, y) coordinate data. In the event that (x, y, z) coordinate data is available, the references to (x, y) coordinate data may be replaced with (x, y, z) coordinates.

The mesh geometry data 277d defines various geometric shapes within any given scene (e.g., 3D scene 105A of Fig. 1A), such as map features (e.g., map feature 110A of Fig. 1A) The mesh geometry data 277c may be based on the zoom level data 277d. For example, more, or less map features may be included in any given 3D scene depending on the zoom level at which the 3D scene 105A is being viewed.

The 3D cursor data structure 278 may include data that defines an (x, y) coordinate location of a 3D cursor 278a, such as the 3D cursor 115A of Fig. 1A. A processor, such as processor 225 of Fig. 1A, may execute instructions to reference the (x, y) coordinate location data of the 3D cursor 278a to the (x, y) coordinate reference 277a of the 3D scene data structure 277 such that the processor 225 may execute further instructions to determine a relative (x, y) coordinate location. The 3D cursor data structure 278 may also include data that represents various characteristics of a 3D cursor 278b, such as a geometric shape of the 3D cursor or geometric shapes included as a part of a 3D cursor, such as an arrow, a square box, a pancake shape, etc. The 3D cursor data structure 278 may further include data 278c that defines text to be included as a part of a 3D cursor, data that defines the color of various features of a 3D cursor and data that defines shading of various features of a 3D cursor. As described elsewhere herein, various characteristics of a 3D cursor, such as an arrow orientation or a 3D cursor geometric shape may indicate the presence of map feature, such as the map feature 110A of Fig. 1A within a 3D scene, such as the 3D scene 105A of Fig. 1A. Automatic movement of a 3D cursor, orientation of a 3D cursor and change of geometric shape of a 3D cursor with regard to map features within a 3D scene is particularly useful when the 3D scene is heavily populated with a plurality of features. The 3D cursor data structure 278b may also include (x, y, z) coordinate data that defines at least a portion of a 3D cursor in addition to, or in lieu of (x, y) coordinate data. In the event that (x, y, z) coordinate data is available, the references to (x, y) coordinate data may be replaced with (x, y, z) coordinates.

In operation, a user of a computing device, such as the client device 205 depicted in Fig. 2A, may launch a 3D scene viewing application by any known mechanism (e.g., the user may select a corresponding icon included on a touch screen display, or, the 3D scene viewing application may be configured to automatically run as a background task when the client device is powered on, etc.). The computing device receives data representative of a 3D scene 276 via a computer network where the scene includes a zoom level and a plurality of map features represented by the received data. The computing device identifies a mesh geometry of a map feature within the 3D scene based on the received data and determines an orientation of a 3D cursor based on the zoom level and the mesh geometry of the map feature. The computing device further receives an instruction or signal indicating selection of a point on the 3D scene. The received instruction or signal includes data representing the selected point within the mesh geometry of the scene and orients the 3D scene view within a map viewport in response to receiving the 3D cursor selection to display the map feature based on the point within the mesh geometry of the map feature indicated by the 3D cursor selection.

A user may, for example, move the 3D cursor (e.g., 3D cursor 115A of Fig. 1A) over a vertical surface (e.g., surface 111A of map feature 110A of Fig. 1A) using a cursor controller (e.g., manual cursor control 245 of Fig. 2A). The client device 205 may automatically orient an arrow portion of the 3D cursor 115A approximately normal to the surface 111A. The client device 205 may determine the approximate normal to the surface 111A based on the map feature 110A mesh geometry data, such as mesh geometry data 277d of Fig. 2B. The client device 205 may automatically generate a display having a view oriented toward the surface 111A when the client device 205 receives a selection indication from the cursor controller 245. The client device 205 may determine an approximate surface normal based on vertices of the map feature mesh geometry data 277d, corresponding to a current zoom level determined based on zoom level data 277c, that are proximate the 3D cursor 115A current (x, y, z) coordinate location based on, for example, 3D cursor (x, y, z) coordinate data 278a and map feature mesh geometry data 277d. Using an average surface normal may prevent 3D cursor 115A orientation wobble.

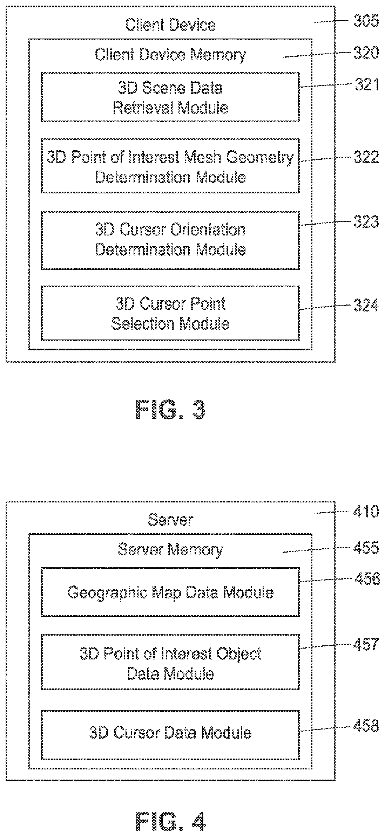

Fig. 3 depicts a client device 305, which may be similar to the client device 205 of Fig. 2A. The device 305 may include various modules 321, 322, 323, 324 stored on a memory 320 related to providing a view of a desired orientation of a 3D scene to a user. The modules 321, 322, 323, 324 may, for example, include various instructions within a client device 3D scene display orientation module 250 as depicted in Fig. 2A. While the modules 321, 322, 323, 324 stored on the memory 320 will be described as including instructions that may be executed on a processor similar to processor 225 of Fig. 2A, it should be understood that the modules 321, 322, 323, 324 may be executed on any suitable processor. A 3D scene data retrieval module 321 may be stored on the memory 320 and include instructions that, when executed on the processor 225, retrieve map feature data from a 3D map feature database 275 of Fig. 2A, for example. The map feature data may be stored on a remote server, such as server 210 of Fig. 2A, for example, or may be, at least in part, stored on the memory 320 within the client device 305. The map feature data may include information related to each map feature within a 3D scene, such as a zoom level and mesh geometry. A 3D point of interest mesh geometry determination module 322 may be stored on the memory 320 and include instructions that, when executed on the processor 225, may determine mesh geometry for a map feature over which a 3D cursor is positioned within the 3D scene based on the mesh geometry data (e.g., mesh geometry data 277d). A 3D cursor orientation determination module 323 may be stored on the memory 320 and include instructions that, when executed on the processor 225, may determine an orientation for the 3D cursor based on the zoom level and the mesh geometry associated with the map feature over which the 3D cursor is positioned within the 3D scene. For example, mesh geometry data for a given map feature may be unique for any given zoom level and executing the instructions included in the 3D cursor orientation determination module 323 may determine a 3D cursor orientation that is approximately normal to a surface of the given map feature based on an average of vertices proximate (x, y, z) coordinates associated with a current 3D cursor location. The orientation of the 3D cursor may indicate to a user a surface of a given map feature that will be in view should the user click a corresponding cursor controller (e.g., as depicted in Fig. 1B with the 3D cursor arrow 115B oriented approximately normal to surface 111B of map feature 110B). A 3D cursor point selection module 324 may be stored on the memory 320 and include instructions that, when executed on the processor 225, may orient a display of a 3D scene within a map viewport such that a view of a surface of a map feature is depicted (e.g., as depicted in Fig. 1C) that is normal to the orientation of the 3D cursor. In a tilt or globe view, selection of a map feature may orient a camera view by rotating the globe such that the surface of the map feature covered by the 3D cursor directly faces the camera.

Turning to Fig. 4, a server 410, which may be similar to the server 210 of Fig. 2A, is depicted to include various modules 456, 457, 458 stored on a memory 455 related to providing a view of a desired orientation of a 3D scene to a user. The modules 456, 457, 458 may, for example, be included within a server 3D scene display orientation module 280 as depicted in Fig. 2A. While the modules 456, 457, 458 stored on the memory 455 will be described as being executed on a processor similar to processor 260 of Fig. 2A, it should be understood that the modules 456, 457, 458 may be executed on any suitable processor.

A geographic map data module 456 may be stored on the memory 455 and include instructions that, when executed on the processor 260, retrieve geographic map data 271 from a geographic map database, such as the geographic map database 270 of Fig. 2A, and communicate the geographic map data to a client device, such as the client devices 205, 305 of Figs. 2 and 3, respectively. It should be understood that the geographic map data may be, at least in part, stored on a second server that is remote from the server 410. A 3D map feature data module 457 may be stored on the memory 455 and include instructions that, when executed on the processor 260, retrieves data representative of map features from a 3D map feature database, such as the 3D map feature database 275 of Fig. 2A, and communicates the map feature data to a client device, such as the client devices 205, 305 of Figs. 2 and 3, respectively. The map feature data stored in the 3D scene data structure (e.g., 3D scene data structure 277 of Fig. 2B) may include information related to each map feature, such as a zoom level (e.g., zoom level data 277c of Fig. 2B), a map feature (x, y, z coordinate) location (e.g., (x, y, z coordinate location data 277a of Fig. 2B)) and map feature mesh geometry (e.g., mesh geometry data 277d of Fig. 2B). A 3D cursor data module 458 may be stored on the memory 455 and include instructions that, when executed on the processor 260, may provide 3D cursor data (e.g., 3D cursor data structure 278) to a client device, such as the client devices 205, 305 of Figs. 2 and 3, respectively. In some examples related to the invention, the 3D cursor data (e.g., 3D cursor data structure 278 of Fig. 2B) defines a 3D cursor geometric shape and appearance based on the 3D cursor geometric shape data 278b and text, color and shading data 278c, for example.

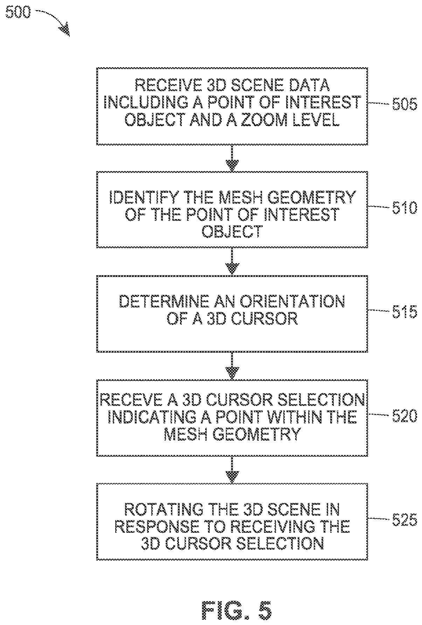

Turning now to Fig. 5, a flow diagram is depicted for a method 500 to providing a view of a desired orientation of a 3D scene to a user. The method 500 may be implemented by execution of module 250 of Fig. 2A, for example, or may be implemented by execution of modules 321, 322, 323, 324 of Fig. 3. It should be understood that the method 500 may be at least partially implemented by execution of module 280 of Fig. 2A or execution of modules 456, 457, 458 of Fig. 4, for example. While it should be understood that at least a portion of the method 500 may be implemented by execution of modules on a processor similar to processor 260 of Fig. 2A, the ensuing description refers to the execution of the various modules as being performed on a processor similar to processor 225 of Fig. 2A. In any event, the processor 225 may execute instructions to receive data representative of a 3D scene via a computer network in block 505. The 3D scene data may include data representative of a plurality of map features associated with a zoom level, where the data for each map feature includes map feature (x, y, z) coordinate) location data and map feature mesh geometry data. At block 501, the processor 225 may execute instructions to identify the mesh geometry of a map feature within the 3D scene based on the received 3D scene data. Block 515 may include instructions to cause the processor 225 to determine an orientation of a 3D cursor based on the zoom level (e.g., zoom level data 277c) and the mesh geometry (e.g., mesh geometry data 277d) of the map feature. At block 520, the processor 225 may execute instructions to receive a 3D cursor selection. The 3D cursor selection may indicate a point within the mesh geometry of the map feature covered or indicated by the 3D cursor. At block 525, the processor 225 may execute instructions to rotate the 3D scene view in response to receiving the 3D cursor selection. In some embodiments, the instructions may cause the processor to rotate the 3D scene view to display the map feature based on the point within the mesh geometry of the map feature indicated by the 3D cursor selection. Display of the selected map feature may be normal to an orientation of the 3D cursor.

In operation, a user of a client device (e.g., client device 205 of Fig.2A) moves a 3D cursor (e.g., 3D cursor 115A of Fig. 1A) around within a 3D scene (e.g., 3D scene 105A of Fig. 1A) using a cursor control (e.g., cursor control 245 of Fig. 2A) within a map viewport (e.g., map viewport 100A of Fig. 1A). When the user positions the 3D cursor over a map feature (e.g., map feature 110A of Fig. 1A), the client device 205 automatically orients an arrow (e.g., arrow 116B of Fig. 1B) of a 3D cursor (e.g., 3D cursor 115B of Fig. 1B) approximately normal to a surface (e.g., surface 111B of Fig. 1B) of the map feature (e.g., map feature 110B of Fig. 1B). The orientation of the arrow indicates to the user a view of the map feature 110B that will be displayed once the user actuates the cursor control 245. When the user actuates the cursor control 245 while the arrow 116B of the 3D cursor 115B is oriented approximately normal to the surface 111B of the map feature 110B, the client device 205 generates a display (e.g., display 105C of Fig. 1C) such that the surface 111C of the map feature 110C is oriented toward a camera view.

Turning to Fig. 6, a street view of a 3D scene 605 is depicted within a map viewport 600. The 3D scene 605 may include a plurality of map features, such as map feature 610. The 3D scene 605 may also include a 3D cursor 615 that may include an arrow portion 616. When a user selects a point in the sky area 620 of the street view of the 3D scene 605, the system (e.g., system 100A of Fig. 1A) may change the display 605 to an aerial 3D global view (e.g., aerial 3D global view 105A of Fig. 1A).

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Additionally, certain embodiments are described herein as including logic or a number of components, modules, or mechanisms. Modules may constitute either software modules or hardware modules. A hardware module is tangible unit capable of performing certain operations and may be configured or arranged in a certain manner. In example embodiments, one or more computer systems (e.g., a standalone, display or server computer system) or one or more hardware modules of a computer system (e.g., a processor or a group of processors) may be configured by software (e.g., an application or application portion) as a hardware module that operates to perform certain operations as described herein.

In various embodiments, a module or routine may be implemented mechanically or electronically. For example, a module may comprise dedicated circuitry or logic that is permanently configured (e.g., as a special-purpose processor, such as a field programmable gate array (FPGA) or an application-specific integrated circuit (ASIC)) to perform certain operations. A module may also comprise programmable logic or circuitry (e.g., as encompassed within a general-purpose processor or other programmable processor) that is temporarily configured by software to perform certain operations. It will be appreciated that the decision to implement a module mechanically, in dedicated and permanently configured circuitry, or in temporarily configured circuitry (e.g., configured by software) may be driven by cost and time considerations.

Accordingly, the term "module" should be understood to encompass a tangible entity, be that an entity that is physically constructed, permanently configured (e.g., hardwired), or temporarily configured (e.g., programmed) to operate in a certain manner or to perform certain operations described herein. As used herein, "hardware-implemented module" refers to a hardware module. Considering embodiments in which hardware modules are temporarily configured (e.g., programmed), each of the hardware modules need not be configured or instantiated at any one instance in time. For example, where the hardware modules comprise a general-purpose processor configured using software, the general-purpose processor may be configured as respective different hardware modules at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple of such hardware modules exist contemporaneously, communications may be achieved through signal transmission (e.g., over appropriate circuits and buses) that connect the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods, modules and routines described herein may be at least partially processor-implemented. For example, at least some of the operations of a method may be performed by one or processors or processor-implemented hardware modules. The performance of certain of the operations may be distributed among the one or more processors, not only residing within a single machine, but deployed across a number of machines. In some example embodiments, the processor or processors may be located in a single location (e.g., within a home environment, an office environment or as a server farm), while in other embodiments the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network (e.g., the Internet) and via one or more appropriate interfaces (e.g., application program interfaces (APIs).)

The performance of certain of the operations may be distributed among the one or more processors, not only residing within a single machine, but also deployed across a number of machines. In some example embodiments, the one or more processors or processor-implemented modules may be located in a single geographic location (e.g., within a home environment, an office environment, or a server farm). In other example embodiments, the one or more processors or processor-implemented modules may be distributed across a number of geographic locations.

Some portions of this specification are presented in terms of algorithms or symbolic representations of operations on data stored as bits or binary digital signals within a machine memory (e.g., a computer memory). These algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or a combination thereof), registers, or other machine components that receive, store, transmit, or display information.

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

Some embodiments may be described using the expression "coupled" and "connected" along with their derivatives. For example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of the description. This description should be read to include one or at least one and the singular also includes the plural unless it is obvious that it is meant otherwise.

Still further, the figures depict preferred examples of a map editor system for purposes of illustration only. One skilled in the art will readily recognize from the following discussion that alternative embodiments of the structures and methods illustrated herein may be employed without departing from the principles described herein.

Upon reading this disclosure, those of skill in the art will appreciate still additional alternative structural and functional designs for devices and a method for orienting a 3D map to a view of a surface of a map feature. Thus, while particular embodiments and applications have been illustrated and described, it is to be understood that the disclosed embodiments are not limited to the precise construction and components disclosed herein. Various modifications, changes and variations, which will be apparent to those skilled in the art, may be made in the arrangement, operation and details of the method and apparatus disclosed herein without departing from the scope of the invention as defined in the appended claims.

## Claims

1. A method for orienting a view of a 3D scene within a map viewport (100A, 100B, 100C) displayed on a client computing device, the method comprising:
receiving 3D data representative of a 3D scene via a computer network, the scene including a map feature (110B) and a zoom level;
identifying a 3D geometry of the map feature within the 3D scene based on the received 3D data; determining a point within the 3D geometry of the map feature based on a location of a 3D cursor (115B) within the 3D scene;
**characterised in that**, the method further comprises the steps of:
determining
an approximate normal to a surface (111B) of the map feature, wherein the approximate normal is proximate to the determined point within the 3D geometry;
determining an orientation of the 3D cursor based on the determined approximate normal to the map feature surface;
orienting the 3D cursor, within the displayed map viewport (100B), according to the determined orientation to indicate to a user that a view corresponding to the 3D cursor orientation of the map feature will result if the user selects a corresponding cursor controller;
receiving a 3D cursor selection from the cursor controller while the 3D cursor is oriented according to the determined orientation; and
rotating the 3D scene view in response to receiving the 3D cursor selection from the cursor controller to display the view of the map feature surface indicated by the 3D cursor orientation.

2. The method of claim 1, wherein a geometric shape of the 3D cursor indicates a presence of the map feature.

3. The method of claim 1, wherein the 3D geometry includes a plurality of vertices and the approximate normal is defined on the basis of at least three of the plurality of vertices.

4. The method of claim 1, wherein determining the orientation of the 3D cursor includes determining an average surface normal of the 3D cursor, based on vertices of the 3D geometry that are proximate to the point within the 3D geometry of the map feature indicated by the selection of the 3D cursor.

5. The method of claim 1, wherein the 3D geometry of the map feature defines building geometry that is formed at nearly right angles within the 3D scene.

6. A computing device configured to display a view of a 3D scene within a map viewport (100A, 100B, 100C) of a display, the computing device comprising:
a cursor controller (245);
a processor (225);
a first routine stored on a memory that, when executed on the processor, causes the computing device to receive data representative of a 3D scene via a computer network, the scene including a plurality of map features (110B) and a zoom level;
a second routine stored on a memory that, when executed on the processor, causes the computing device to identify a 3D geometry of a map feature within the 3D scene based on the received data;
a third routine stored on a memory that, when executed on the processor, causes the computing device to determine a point within the 3D geometry of the map feature based on a location of a 3D cursor (115B) within the 3D scene;
a fourth routine stored on a memory that, when executed on the processor, causes the computing device to determine an approximate normal to a surface (111B) of the map feature proximate to the determined point within the 3D geometry;
a fifth routine stored on a memory that, when executed on the processor, causes the computing device to determine an orientation of the 3D cursor based on the determined approximate normal to the surface of the map feature;
a sixth routine stored on a memory that, when executed on the processor, causes the computing device to orient the 3D cursor, within the displayed map viewport (100B), according to the determined orientation to indicate to a user that a view corresponding to the 3D cursor orientation of the map feature will result if the user selects the cursor controller ;
a seventh routine stored on a memory that, when executed the processor, causes the computing device to receive a 3D cursor selection from the cursor controller while the 3D cursor is oriented according to the determined orientation; and
an eighth routine stored on a memory that, when executed on the processor, causes the computing device to rotate the 3D scene view in response to receiving the 3D cursor selection from the cursor controller to display the view of the surface of the map feature indicated by the 3D cursor orientation.

7. The computing device of claim 6, wherein a geometric shape of the 3D cursor indicates a presence of the map feature.

8. The computing device of claim 6, wherein the 3D geometry includes a plurality of vertices and the approximate normal is defined by at least three of the plurality of vertices.

9. The computing device of claim 6, wherein the view of the 3D scene that will be displayed when a user actuates the cursor controller is based on an average surface normal that is determined using vertices that are proximate the point within the 3D geometry of the map feature having a location corresponding to the 3D cursor location.

10. A non-transitory computer-readable medium storing instructions for orienting a view of a 3D scene within a map viewport displayed on a client computing device, the non-transitory computer-readable medium comprising:
instructions that, when executed on the processor of the client computing device, causes the client computing device to perform the method of any of claims 1 to 5.

## Patentansprüche

1. Verfahren zum Ausrichten einer Ansicht einer 3D-Szene innerhalb eines Kartenansichtsfensters (100A, 100B, 100C), das auf einer Client-Rechenvorrichtung angezeigt wird, wobei das Verfahren Folgendes umfasst:
Empfangen von 3D-Daten, die für eine 3D-Szene repräsentativ sind, über ein Computernetzwerk, wobei die Szene ein Kartenmerkmal (110B) und eine Zoomstufe beinhaltet;
Identifizieren einer 3D-Geometrie des Kartenmerkmals innerhalb der 3D-Szene basierend auf den empfangenen 3D-Daten;
Bestimmen eines Punktes innerhalb der 3D-Geometrie des Kartenmerkmals basierend auf einer Position eines 3D-Cursors (115B) innerhalb der 3D-Szene;
**dadurch gekennzeichnet, dass** das Verfahren ferner die folgenden Schritte umfasst:
Bestimmen einer ungefähren Normalen zu einer Oberfläche (111B) des Kartenmerkmals, wobei die ungefähre Normale nahe dem bestimmten Punkt innerhalb der 3D-Geometrie ist;
Bestimmen einer Ausrichtung des 3D-Cursors basierend auf der bestimmten ungefähren Normalen zu der Kartenmerkmalsoberfläche;
Ausrichten des 3D-Cursors innerhalb des angezeigten Kartenansichtsfensters (100B) gemäß der bestimmten Ausrichtung, um einem Benutzer anzugeben, dass eine Ansicht entsprechend der 3D-Cursor-Ausrichtung des Kartenmerkmals resultiert, wenn der Benutzer eine entsprechende Cursor-Steuerung auswählt;
Empfangen einer 3D-Cursor-Auswahl von der Cursor-Steuerung, während der 3D-Cursor gemäß der bestimmten Ausrichtung ausgerichtet ist; und
Drehen der 3D-Szenenansicht als Reaktion auf das Empfangen der 3D-Cursor-Auswahl von der Cursor-Steuerung, um die Ansicht der Kartenmerkmalsoberfläche anzuzeigen, die durch die 3D-Cursor-Ausrichtung angegeben wird.

2. Verfahren nach Anspruch 1, wobei eine geometrische Form des 3D-Cursors das Vorhandensein des Kartenmerkmals angibt.

3. Verfahren nach Anspruch 1, wobei die 3D-Geometrie eine Vielzahl von Eckpunkten beinhaltet und die ungefähre Normale auf der Basis von zumindest drei aus der Vielzahl von Eckpunkten definiert ist.

4. Verfahren nach Anspruch 1, wobei das Bestimmen der Ausrichtung des 3D-Cursors das Bestimmen einer durchschnittlichen Oberflächennormalen des 3D-Cursors basierend auf Eckpunkten der 3D-Geometrie beinhaltet, die nahe dem Punkt innerhalb der 3D-Geometrie des Kartenmerkmals sind, der durch die Auswahl des 3D-Cursors angegeben wird.

5. Verfahren nach Anspruch 1, wobei die 3D-Geometrie des Kartenmerkmals Baugeometrie definiert, die innerhalb der 3D-Szene in nahezu rechten Winkeln gebildet wird.

6. Rechenvorrichtung, die konfiguriert ist, um eine Ansicht einer 3D-Szene innerhalb eines Kartenansichtsfensters (100A, 100B, 100C) einer Anzeige anzuzeigen, wobei die Rechenvorrichtung Folgendes umfasst:
eine Cursor-Steuerung (245);
einen Prozessor (225);
eine erste Routine, die in einem Speicher gespeichert ist, die, wenn sie auf dem Prozessor ausgeführt wird, bewirkt, dass die Rechenvorrichtung Daten, die für eine 3D-Szene repräsentativ sind, über ein Computernetzwerk empfängt, wobei die Szene eine Vielzahl von Kartenmerkmalen (110B) und eine Zoomstufe beinhaltet;
eine zweite Routine, die in einem Speicher gespeichert ist, die, wenn sie auf dem Prozessor ausgeführt wird, bewirkt, dass die Rechenvorrichtung eine 3D-Geometrie eines Kartenmerkmals innerhalb der 3D-Szene basierend auf den empfangenen Daten identifiziert;
eine dritte Routine, die in einem Speicher gespeichert ist, die, wenn sie auf dem Prozessor ausgeführt wird, bewirkt, dass die Rechenvorrichtung einen Punkt innerhalb der 3D-Geometrie des Kartenmerkmals basierend auf einer Position eines 3D-Cursors (115B) innerhalb der 3D-Szene bestimmt;
eine vierte Routine, die in einem Speicher gespeichert ist, die, wenn sie auf dem Prozessor ausgeführt wird, bewirkt, dass die Rechenvorrichtung eine ungefähre Normale zu einer Oberfläche (111B) des Kartenmerkmals nahe dem bestimmten Punkt innerhalb der 3D-Geometrie bestimmt;
eine fünfte Routine, die in einem Speicher gespeichert ist, die, wenn sie auf dem Prozessor ausgeführt wird, bewirkt, dass die Rechenvorrichtung eine Ausrichtung des 3D-Cursors basierend auf der bestimmten ungefähren Normalen zu der Oberfläche des Kartenmerkmals bestimmt;
eine sechste Routine, die in einem Speicher gespeichert ist, die, wenn sie auf dem Prozessor ausgeführt wird, bewirkt, dass die Rechenvorrichtung den 3D-Cursor innerhalb des angezeigten Kartenansichtsfensters (100B) gemäß der bestimmten Ausrichtung ausrichtet, um einem Benutzer anzugeben, dass eine Ansicht entsprechend der 3D-Cursor-Ausrichtung des Kartenmerkmals resultiert, wenn der Benutzer die Cursor-Steuerung auswählt;
eine siebte Routine, die in einem Speicher gespeichert ist, die, wenn sie auf dem Prozessor ausgeführt wird, bewirkt, dass die Rechenvorrichtung eine 3D-Cursor-Auswahl von der Cursor-Steuerung empfängt, während der 3D-Cursor gemäß der bestimmten Ausrichtung ausgerichtet ist; und
eine achte Routine, die in einem Speicher gespeichert ist, die, wenn sie auf dem Prozessor ausgeführt wird, bewirkt, dass die Rechenvorrichtung die 3D-Szenenansicht als Reaktion auf das Empfangen der 3D-Cursor-Auswahl von der Cursor-Steuerung dreht, um die Ansicht der Oberfläche des Kartenmerkmals anzuzeigen, die durch die 3D-Cursor-Ausrichtung angegeben wird.

7. Rechenvorrichtung nach Anspruch 6, wobei eine geometrische Form des 3D-Cursors ein Vorhandensein des Kartenmerkmals angibt.

8. Rechenvorrichtung nach Anspruch 6, wobei die 3D-Geometrie eine Vielzahl von Eckpunkten beinhaltet und die ungefähre Normale durch zumindest drei aus der Vielzahl von Eckpunkten definiert ist.

9. Rechenvorrichtung nach Anspruch 6, wobei die Ansicht der 3D-Szene, die angezeigt wird, wenn ein Benutzer die Cursor-Steuerung betätigt, auf einer durchschnittlichen Oberflächennormalen basiert, die unter Verwendung von Eckpunkten bestimmt wird, die nahe dem Punkt innerhalb der 3D-Geometrie des Kartenmerkmals sind, die eine Position entsprechend der 3D-Cursor-Position aufweisen.

10. Nichtflüchtiges computerlesbares Medium, das Anweisungen zum Ausrichten einer Ansicht einer 3D-Szene innerhalb eines Kartenansichtsfensters speichert, das auf einer Client-Rechenvorrichtung angezeigt wird, wobei das nichtflüchtige computerlesbare Medium Folgendes umfasst:
Anweisungen, die, wenn sie auf dem Prozessor der Client-Rechenvorrichtung ausgeführt werden, bewirken, dass die Client-Rechenvorrichtung das Verfahren nach einem der Ansprüche 1 bis 5 durchführt.

## Revendications

1. Procédé permettant d'orienter une vue d'une scène 3D dans une fenêtre d'affichage de carte (100A, 100B, 100C) affichée sur un dispositif informatique client, le procédé comprenant :
la réception des données 3D représentatives d'une scène 3D par l'intermédiaire d'un réseau informatique, la scène comprenant un détail de carte (110B) et un niveau d'agrandissement ;
l'identification d'une géométrie 3D du détail de carte dans la scène 3D sur la base des données 3D reçues ; la détermination d'un point dans la géométrie 3D du détail de carte sur la base d'un emplacement d'un curseur 3D (115B) dans la scène 3D ;
**caractérisé en ce que** le procédé comprend en outre les étapes de :
détermination
d'une normale approximative à une surface (111B) du détail de carte, ladite normale approximative étant proche du point déterminé dans la géométrie 3D ;
la détermination d'une orientation du curseur 3D sur la base de la normale approximative déterminée à la surface de détail de carte ;
l'orientation du curseur 3D, dans la fenêtre d'affichage de carte affichée (100B), selon l'orientation déterminée pour indiquer à un utilisateur qu'une vue correspondant à l'orientation du curseur 3D du détail de carte en résultera si l'utilisateur choisit un dispositif de commande de curseur correspondant ;
la réception d'un choix de curseur 3D en provenance du dispositif de commande de curseur pendant que le curseur 3D est orienté selon l'orientation déterminée ; et
la rotation de la vue de scène 3D en réponse à la réception du choix du curseur 3D en provenance du dispositif de commande de curseur pour afficher la vue de la surface de détail de carte indiquée par l'orientation de curseur 3D.

2. Procédé selon la revendication 1, une forme géométrique du curseur 3D indiquant une présence du détail de carte.

3. Procédé selon la revendication 1, ladite géométrie 3D comprenant une pluralité de sommets et ladite normale approximative étant définie sur la base d'au moins trois de la pluralité de sommets.

4. Procédé selon la revendication 1, ladite détermination de l'orientation du curseur 3D comprenant la détermination d'une normale de surface moyenne du curseur 3D, sur la base des sommets de la géométrie 3D qui sont proches du point dans la géométrie 3D du détail cartographique indiqué par le choix du curseur 3D.

5. Procédé selon la revendication 1, ladite géométrie 3D du détail de carte définissant une géométrie de bâtiment qui est formée à des angles presque droits dans la scène 3D.

6. Dispositif informatique configuré pour afficher une vue d'une scène 3D dans une fenêtre d'affichage de carte (100A, 100B, 100C) d'un dispositif d'affichage, le dispositif informatique comprenant :
un dispositif de commande de curseur (245) ; un processeur (225) ;
un premier programme stocké sur une mémoire qui, lorsqu'il est exécuté sur le processeur, amène le dispositif informatique à recevoir des données représentatives d'une scène 3D par l'intermédiaire d'un réseau informatique, la scène comprenant une pluralité de détails de carte (110B) et un niveau d'agrandissement ;
un deuxième programme stocké sur une mémoire qui, lorsqu'il est exécuté sur le processeur, amène le dispositif informatique à identifier une
géométrie 3D d'un détail de carte dans la scène 3D sur la base des données reçues ;
un troisième programme stocké sur une mémoire qui, lorsqu'il est exécuté sur le processeur, amène le dispositif informatique à déterminer un point dans la géométrie 3D du détail de carte sur la base d'un emplacement d'un curseur 3D (115B) dans la scène 3D ;
un quatrième programme stocké sur une mémoire qui, lorsqu'il est exécuté sur le processeur, amène le dispositif informatique à déterminer
une normale approximative à une surface (111B) du détail de carte à proximité du point déterminé dans la géométrie 3D ;
un cinquième programme stocké sur une mémoire qui, lorsqu'il est exécuté sur le processeur, amène le dispositif informatique à déterminer une
orientation du curseur 3D sur la base de la normale approximative déterminée à la surface du détail de carte ;
un sixième programme stocké sur une mémoire qui, lorsqu'il est exécuté sur le processeur, amène le dispositif informatique à orienter le curseur 3D,
dans la fenêtre d'affichage de carte affichée (100B), selon l'orientation déterminée pour indiquer à un utilisateur qu'une vue correspondant à l'orientation du curseur 3D du détail de carte en résultera si l'utilisateur choisi le dispositif de commande de curseur ;
un septième programme stocké sur une mémoire qui, lorsqu'il est exécuté par le processeur, amène le dispositif informatique à recevoir un
choix de curseur 3D en provenance du dispositif de commande de curseur pendant que le curseur 3D est orienté selon l'orientation déterminée ; et
un huitième programme stocké sur une mémoire qui, lorsqu'il est exécuté sur le processeur, amène le dispositif informatique à faire tourner la
vue de scène 3D en réponse à la réception du choix de curseur 3D en provenance du dispositif de commande de curseur pour afficher la vue de la surface du détail de carte indiqué par l'orientation du curseur 3D.

7. Dispositif informatique selon la revendication 6, une forme géométrique du curseur 3D indiquant une présence du détail de carte.

8. Dispositif informatique selon la revendication 6, ladite géométrie 3D comprenant une pluralité de sommets et ladite normale approximative étant définie par au moins trois de la pluralité de sommets.

9. Dispositif informatique selon la revendication 6, ladite vue de la scène 3D qui sera affichée lorsqu'un utilisateur actionne le dispositif de commande de curseur étant basée sur une normale de surface moyenne qui est déterminée à l'aide des sommets qui sont à proximité du point dans la géométrie 3D du détail de carte possédant un emplacement correspondant à l'emplacement du curseur 3D.

10. Support non transitoire lisible par ordinateur stockant des instructions destinées à orienter une vue d'une scène 3D dans une fenêtre d'affichage de carte affichée sur un dispositif informatique client, le support non transitoire lisible par ordinateur comprenant :
des instructions qui, lorsqu'elles sont exécutées sur le processeur du dispositif informatique client, amènent le dispositif informatique client
à réaliser le procédé selon l'une quelconque des revendications 1 à 5.
